# EUROPEAN PATENT APPLICATION

(11) **EP 4 177 609 A1**
(43) Date of publication of application: **10.05.2023**
(21) Application number: 21833680.8
(22) Date of filing: 11.03.2021
(51) Int. Cl.: G01N 35/00

(54) **AUTOMATED ANALYZER**

(30) Priority: 03.07.2020 JP 2020115571
(71) Applicant: HITACHI HIGH-TECH CORPORATION, Tokyo 105-6409 (JP)
(72) Inventor: KUMAGAI, Takahiro, Tokyo 105-6409 (JP); SUZUKI, Yoichiro, Tokyo 105-6409 (JP); SAGAWA, Syotaro, Tokyo 105-6409 (JP); MIYAKAWA, Takushi, Tokyo 105-6409 (JP)
(74) Representative: MERH-IP Matias Erny Reichl Hoffmann Patentanwälte PartG mbB
(86) International application number: PCT/JP2021/009794
(87) International publication number: WO 2022/004064

(57) **Abstract**

An object of the present invention is to provide an automatic analyzer that can decrease the frequency of cleaning as compared to the past by suppressing breeding of bacteria and the like in a buffer tank as compared to the past and can reduce maintenance work time of an operator. Provided is an automatic analyzer comprising: an analysis module 20 that analyzes a specimen; and a supply system that supplies a liquid to the analysis module 20, wherein the supply system includes: a buffer tank 3 that temporarily stores pure water supplied from a pure water production device 50 outside of the analyzer; a supply channel 7 through which the pure water in the buffer tank 3 is sent to the analysis module 20; a circulation water pump 4 that feeds the pure water in the buffer tank 3; a circulation channel 8 through which the pure water discharged from the circulation water pump 4 is returned to the buffer tank 3; a sterilization mechanism 5 that sterilizes the pure water in the supply system; and a control unit 30 that controls an operation of each device in the supply system.

## Description

### Technical Field

The present invention relates to an automatic analyzer that performs qualitative and quantitative analysis of a sample such as blood, urine, and the like.

### Background Art

As an example of device internal piping, which is suitable for feeding purified water through pipes to the washing chamber of an automatic analyzer or to a water injection mechanism using a nozzle, Patent Literature 1 describes that a structure is formed in which a self-operated control type pressure reducing valve is arranged between a motor-operated pressure pump and a branch pipe, the pipe ahead from the branch pipe is provided with a direct-driven-type solenoid valve and a fixed resistance tube having a specific hole diameter and length, and water is instantaneously supplied by opening and closing the solenoid valve.

### Citation List

### Patent Literature

Patent Literature 1: Japanese Unexamined Patent Application Publication No. Hei10(1998)-10137

### Summary of Invention

### Technical Problem

The automatic analyzer that analyzes specific components in a biological sample such as blood and urine is a device in which with the use of a reagent reacting with a specific component to change the optical characteristics or a reagent having an index specifically reacting with a specific component, the specimen and the reagent are reacted to measure a change in the optical characteristics of the reaction solution or to count the number of labels in the reaction solution for qualitative and quantitative analysis.

In such an automatic analyzer, pure water is used in the process steps of washing a probe, dilution of a reagent, or the like. The pure water to be used is stored in a buffer tank from a water supply facility, and then appropriately supplied to a use destination based on the operating status of the analyzer.

Here, although pure water stored in the buffer tank is in an environment where various germs are easily proliferated, in the case in which various germs proliferate in the buffer tank, a biofilm is sometimes generated. A situation in which water supply is not executed as designed might occur due to the generated biofilm and the like, and in the worst scenario, measurement results may be affected.

Therefore, in order to keep the buffer tank clean with no proliferation of various germs, conventionally, the inside of the buffer tank is periodically cleaned, which however becomes a burden to an operator.

The present invention is to provide an automatic analyzer that reduces the frequency of cleaning by suppressing the proliferation of fungi in a buffer tank as compared with conventional manners and that is capable of reducing working hours for maintenance by an operator.

### Solution to Problem

The present invention includes multiple solutions to solve the problems. An example of the solutions is an automatic analyzer including: a supply system that supplies a liquid to the analysis module, in which the supply system includes: a buffer tank that temporarily stores the liquid supplied from the outside of the analyzer; a supply channel through which the liquid in the buffer tank is sent to the analysis module; a liquid feeding pump that feeds the liquid in the buffer tank; a circulation channel through which the liquid discharged from the liquid feeding pump is returned to the buffer tank; a sterilization unit that sterilizes the liquid in the supply system; and a control unit that controls an operation of each device in the supply system.

### Advantageous Effects of Invention

According to the present invention, it is possible to reduce the frequency of cleaning the buffer tank as compared with conventional manners, and it is possible to reduce working hours for maintenance by an operator. Problems, configurations, and effects other than described above will be apparent from the description of an embodiment below.

### Brief Description of Drawings

Fig. 1 is an outline view for showing an entire configuration of an automatic analyzer according to an embodiment of the present invention.
Fig. 2 is a control flowchart of a sterilization operation when water is fed in the automatic analyzer according to the embodiment.
Fig. 3 is an outline view for showing an entire configuration of another mode of the automatic analyzer according to the embodiment.

### Description of Embodiments

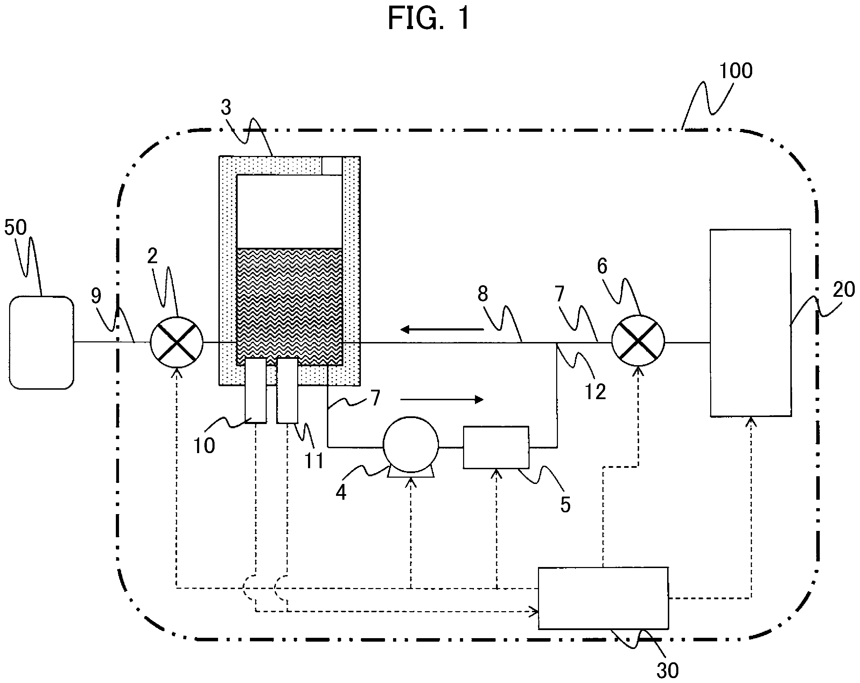

An embodiment of an automatic analyzer according to the present invention will be described with reference to Figs. 1 to 3.

First, the overall structure of the automatic analyzer will be described with reference to Fig. 1. Fig. 1 is a schematic diagram showing the overall structure of the automatic analyzer according to the embodiment of the present invention.

An automatic analyzer 100 shown in Fig. 1 includes a solenoid valve 2, a buffer tank 3, a circulation water pump 4, a sterilization mechanism 5, a solenoid valve 6, a supply channel 7, a circulation channel 8, a water supply channel 9, a cleanliness measurement unit 10, a liquid temperature measurement unit 11, a control unit 30, an analysis module 20, and the like.

Among these components, the solenoid valve 2, the buffer tank 3, the circulation water pump 4, the sterilization mechanism 5, the solenoid valve 6, the supply channel 7, the circulation channel 8, the water supply channel 9, the cleanliness measurement unit 10, the liquid temperature measurement unit 11, and the control unit 30 constitute a supply system that supplies a liquid to the analysis module 20.

The analysis module 20 is a module that performs qualitative and quantitative analysis of components of a specimen. The analysis items of the analysis module 20 are not specifically limited. Various analysis items such as biochemical items, immune items, and electrolyte items are targets, and publicly known configurations can be adopted as the configuration of the analysis module 20. However, a configuration that uses pure water supplied at least from the supply system is included.

The buffer tank 3 is connected to a pure water production device 50, which is an external device, through the water supply channel 9, and is a tank that temporarily stores a liquid, for example, pure water, supplied from the pure water production device 50. When the solenoid valve 2 is opened by an open/close signal from the control unit 30, pure water is supplied from the pure water production device 50 to the buffer tank 3. In the buffer tank 3, a water gauge and the like can be provided.

The supply channel 7 is a passage that connects the buffer tank 3 to the analysis module 20 such that pure water in the buffer tank 3 is sent to the analysis module 20, and is configured such that pure water is flowable. The supply channel 7 is provided with the circulation water pump 4, the sterilization mechanism 5, and the solenoid valve 6. When the solenoid valve 6 is opened by the open/close signal from the control unit 30, the pure water discharged from the circulation water pump 4 is supplied to the analysis module 20, whereas when the solenoid valve 6 is closed, the total amount of the pure water discharged from the circulation water pump 4 is returned to the buffer tank 3.

The circulation water pump 4 is a pump that feeds or circulates pure water in the buffer tank 3 to the analysis module 20.

The circulation channel 8 is branched from the branch unit 12 of the supply channel 7, and is a passage through which a part of the pure water discharged from the circulation water pump 4 is returned to the buffer tank 3.

The sterilization mechanism 5 is a mechanism that sterilizes the pure water flowing through the supply channel 7, and is formed of an ultraviolet light source and the like. This sterilization mechanism 5 is installed on the downstream side of the circulation water pump 4 and the upstream side of the branch unit 12 of the supply channel 7 and the circulation channel 8.

The cleanliness measurement unit 10 is a device that measures the cleanness of pure water stored in the buffer tank 3, and is formed of an electric conductivity meter and the like that measure, for example, the electric conductivity of pure water. Note that the cleanliness measurement unit 10 may be a device that measures the electric conductivity of pure water in the supply channel 7 or the circulation channel 8. Moreover, the cleanliness measurement unit 10 is not limited to the device that measures the electric conductivity of pure water, and other units can be used.

The liquid temperature measurement unit 11 is a thermometer that measures the liquid temperature of pure water in the buffer tank 3. Note that it can be said that the liquid temperature measurement unit 11 measures the liquid temperature of pure water in the supply channel 7 or the circulation channel 8.

The control unit 30 is a part that controls the operation of each device in the supply system described above. This control unit 30 may have a function that controls the operation of the analysis module 20 or may be independent, which is not specifically limited. Preferably, the control unit 30 can be embodied by reading programs in a computer having a CPU, memory, or the like or in a Field-Programmable Gate Array (FPGA) to execute computation. These programs are stored in an internal recording medium in the components or in an external recording medium (not shown in the drawing), and read and executed by the CPU.

Note that the control process of the operation may be integrated into one program, may be separated into a plurality of programs, or may be the combination of a plurality of programs. Furthermore, a part of or all programs may be embodied by dedicated hardware, or may be formed into a module. Moreover, various programs may be installed to each device from a program distribution server, internal recording medium, or external recording medium.

In the present embodiment, the control unit 30 desirably drives the sterilization mechanism 5 in the case in which pure water is externally supplied to the buffer tank 3 or pure water is supplied from the buffer tank 3 to the analysis module 20. In the automatic analyzer 100, filling the buffer tank 3 with pure water and feeding pure water to the analysis module 20 are sometimes carried out simultaneously. However, also in this case, the sterilization mechanism 5 is driven.

Moreover, the control unit 30 desirably drives the sterilization mechanism 5 also at the time of the startup operation or stop operation of the automatic analyzer 100.

In addition to this, when a specific operation in the analysis module 20 is detected, the control unit 30 desirably operates the sterilization mechanism 5. An example of the specific operation includes the case in which a user such as a service person or a medical technologist inputs an instruction to carry out the operation of the sterilization mechanism 5 by operating an input unit.

Moreover, the control unit 30 can adjust the liquid feeding velocity of the circulation water pump 4 based on the operation of the sterilization mechanism 5. Although the sterilization effect by one-time passing more increases as the flow rate of the pure water flowing through the sterilization mechanism 5 is slower, time necessary for sterilizing pure water in all the buffer tank 3, the supply channel 7, and the circulation channel 8 prolong. On the contrary, although the sterilization effect by one-time passing more decreases as the flow rate of the pure water flowing through the sterilization mechanism 5 is faster, a flow of pure water occurs in the buffer tank 3 to suppress the retention of pure water. On this point, the effect of suppressing the proliferation of various germs can be obtained. Therefore, for example, at the timing when the sterilization mechanism 5 is not operated, the discharge amount of the circulation water pump 4 is increased to accelerate the flow rate, whereas at the timing when the sterilization mechanism 5 is operated, the discharge amount of the circulation water pump 4 can be decreased.

Moreover, the control unit 30 desirably controls the operation of the sterilization mechanism 5 based on the cleanness of pure water measured by the cleanliness measurement unit 10. For example, the sterilization mechanism 5 is operated in the case in which the cleanness of pure water reaches a certain threshold or less, and thus it is possible to perform an appropriate operation of the sterilization mechanism 5 corresponding to the state of water supply or the operation state of the device.

Further, the control unit 30 desirably controls the operation of the sterilization mechanism 5 based on the liquid temperature of pure water measured by the liquid temperature measurement unit 11. Various germs that possibly proliferate in pure water in the buffer tank 3 and the like change the proliferation rate due to water temperatures. For example, the optimum proliferation temperature of oligotrophic bacteria generally ranges from about temperatures of 25 to 30°C. Therefore, by monitoring the temperature of circulating water, the sterilization mechanism 5 is operated at a water temperature when various germs easily proliferate.

The description above is the overall configuration of the automatic analyzer 100.

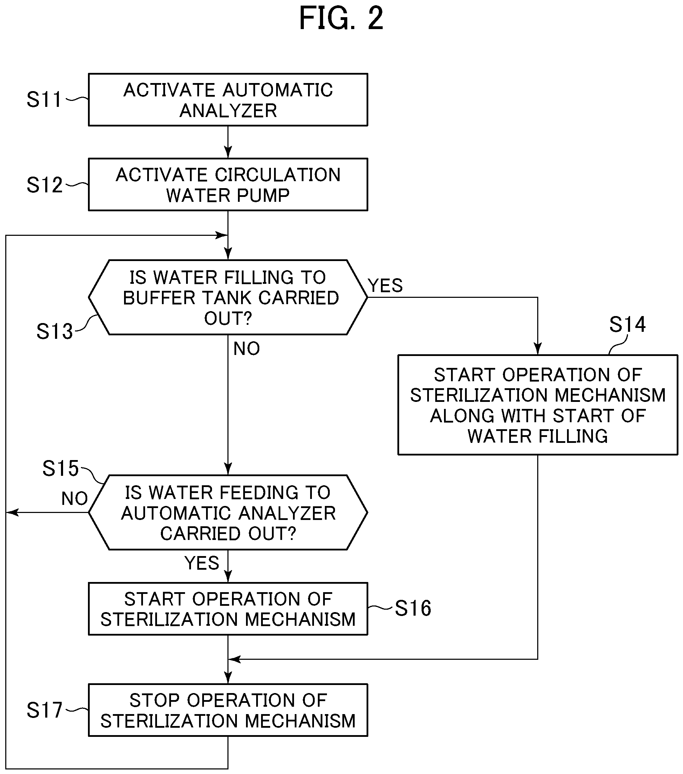

Next, an example of a process flow by the control unit 30 that drives the sterilization mechanism 5 in the automatic analyzer 100 according to the present embodiment will be described with reference to Fig. 2. Fig. 2 is a control flowchart of a sterilization operation when water is fed.

First, as shown in Fig. 2, after the automatic analyzer 100 becomes the operating state (Step S11), the control unit 30 operates the circulation water pump 4 (Step S12).

After that, at every lapse of a predetermined time period, the control unit 30 determines whether it is necessary to carry out water filling from the pure water production device 50 to the buffer tank 3 (Step S13). When it is determined that water filling is necessary, the process goes to Step S14.

Subsequently, the control unit 30 opens the solenoid valve 2 for a predetermined time period to start water filling and to operate the sterilization mechanism 5 (Step S14). After the sterilization mechanism 5 is operated for a predetermined time period to finish sterilization, the sterilization mechanism 5 is stopped (Step S17), and the process returns to Step S13. Note that in Step S14, upon completing water filling, the sterilization mechanism 5 may be operated after a lapse of a predetermined time period.

On the contrary, in Step S13, when it is determined that water filling is unnecessary, the control unit 30 determines whether it is necessary to subsequently carry out water feeding to the analysis module 20 (Step S15). When it is determined that water feeding is necessary, the process goes to Step S16.

Subsequently, the control unit 30 opens the solenoid valve 6 for a predetermined time period, and operates the sterilization mechanism 5 (Step S16). After completing water feeding, the solenoid valve 6 is closed, the sterilization mechanism 5 is stopped (Step S17), and the process returns to Step S13.

On the contrary, in Step S15, when it is determined that water feeding is unnecessary, the process returns to Step S13.

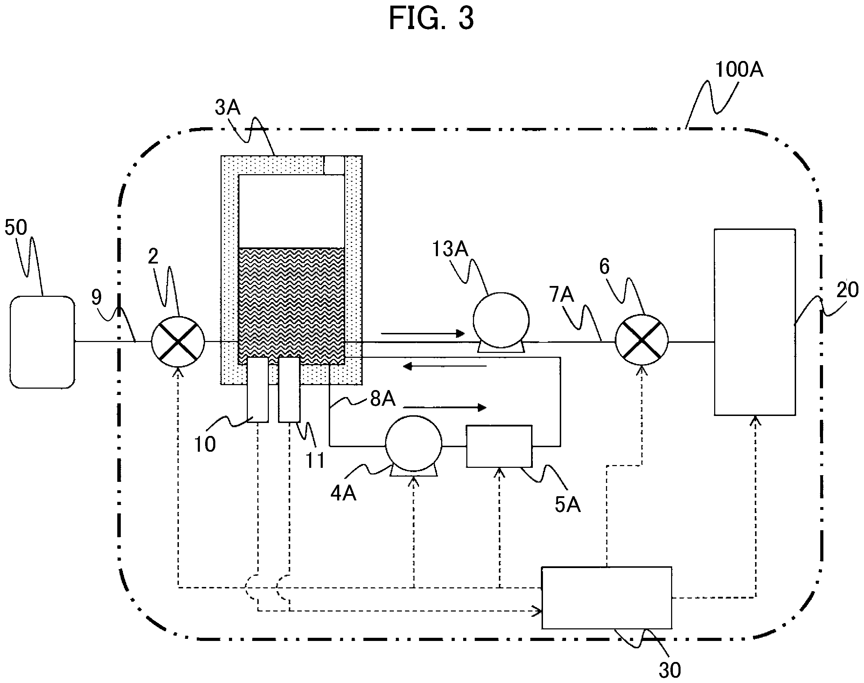

Note that the supply system configuration of the analyzer is not limited to the form shown in Fig. 1. In the following, an exemplary modification will be briefly described with reference to Fig. 3. Fig. 3 is a schematic diagram showing the overall structure of another form of the automatic analyzer of the embodiment.

An automatic analyzer 100A shown in Fig. 3 includes the solenoid valve 2, a buffer tank 3A, a circulation water pump 4A, a sterilization mechanism 5A, the solenoid valve 6, a supply channel 7A, a circulation channel 8A, the water supply channel 9, the cleanliness measurement unit 10, the liquid temperature measurement unit 11, a liquid feeding pump 13A, the control unit 30, the analysis module 20, and the like.

In the automatic analyzer 100A shown in Fig. 3, the circulation water pump 4A and the sterilization mechanism 5A are provided on the circulation channel 8A, unlike the form of the automatic analyzer 100 shown in Fig. 1 in which the circulation channel is branched from the supply channel, and the total amount of pure water discharged from the circulation water pump 4A is returned into the inside of the buffer tank 3A. Moreover, the liquid feeding pump 13A is provided on the supply channel 7A that is a dedicated line supplying pure water to be fed to the analysis module 20.

The other configurations and the operation, and specifically featured operations and configurations are almost the same as those of the automatic analyzer 100 shown in Fig. 1, and the detail is omitted.

Furthermore, Fig. 1 shows the form in which the sterilization mechanism 5 is installed on the downstream side of the circulation water pump 4 and on the upstream side of the branch unit 12 of the supply channel 7 and the circulation channel 8. However, the sterilization mechanism 5 can be provided in the buffer tank 3. In addition, the sterilization mechanism 5 can also be provided between the buffer tank 3 and the circulation water pump 4, or on the circulation channel 8. Moreover, the case is described in which an ultraviolet light source is used as the sterilization mechanism 5. However, various sterilization units can be used other than the ultraviolet light source. Similarly, Fig. 3 shows the form in which the sterilization mechanism 5A is installed on the circulation channel 8A. However, the sterilization mechanism 5A can be provided in the buffer tank 3.

Further, the form is described in which the supply system is disposed in the housing of the automatic analyzer 100. However, a form may be provided in which the supply system is disposed outside the housing of the automatic analyzer 100.

Next, the effect of the present embodiment will be described.

The automatic analyzers 100 and 100A of the foregoing present embodiment have the buffer tanks 3 and 3A that temporarily store pure water supplied from the pure water production device 50, which is an external device, the supply channels 7 and 7A that send pure water in the buffer tanks 3 and 3A to the analysis module 20, the circulation water pumps 4 and 4A that feed pure water in the buffer tank 3, the circulation channels 8 and 8A that return pure water discharged from the circulation water pumps 4 and 4A to the buffer tanks 3 and 3A, the sterilization mechanisms 5 and 5A that perform sterilization of pure water in the supply system, and the control unit 30 that controls the operation of each device in the supply system.

Such a circulation system is provided with the sterilization mechanisms 5 and 5A, and thus pure water stored in the buffer tanks 3 and 3A is circulated and repeatedly sterilized, the proliferation of various germs in the buffer tanks 3 and 3A can be suppressed greatly as compared with conventional analyzers, and pure water in the circulation system including the buffer tanks 3 and 3A can be kept clean even though tasks that take time and effort such as cleaning is reduced as compared with conventional manners. Accordingly, it is possible to intend to shorten working hours for maintenance by an operator, it is possible to repeat sterilization, and thus it is possible to obtain the effect that the specifications of the configurations of the sterilization mechanisms 5 and 5A are obtained by a minimum necessary amount. Further, since the sterilization mechanisms 5 and 5A are provided on the passage having a small diameter, it is unnecessary to provide a sterilization mechanism having a large output as compared with the case in which the sterilization mechanism is provided in the buffer tanks 3 and 3A, and it is possible to achieve a reduction in the size and the like.

Moreover, since the sterilization mechanisms 5 and 5A are driven in the case in which pure water is externally supplied to the buffer tanks 3 and 3A, pure water to be supplied from the pure water production device 50 can be sterilized early and stored, and it is possible to store pure water of higher cleanness. Furthermore, it is possible to carry out sterilization only at necessary timing, and it is also possible to prolong the lifetime of the sterilization mechanisms 5 and 5A and to solve the restrictions on continuous operation.

Further, the sterilization mechanisms 5 and 5A are driven in the case in which pure water is supplied from the buffer tanks 3 and 3A to the analysis module 20, and thus it is possible to again carry out the sterilization operation when water is supplied to the analysis module 20, it is possible to feed clean pure water to the analysis module 20, it is possible to carry out sterilization only at necessary timing, and it is possible to obtain the effect that the lifetime of the sterilization mechanisms 5 and 5A is prolonged and the like.

In addition, the sterilization mechanisms 5 and 5A are driven at the time of the startup operation of the automatic analyzers 100 and 100A, and thus it is possible to use pure water left in the circulation passage in the analysis module 20 after subjected to sufficient sterilization even in the case in which the use interval of the automatic analyzers 100 and 100A is prolonged.

Further, in the state in which the automatic analyzers 100 and 100A are stopped, the circulation water pumps 4 and 4A or the sterilization mechanisms 5 and 5A are not operated to leave pure water in the buffer tanks 3 and 3A and the like for a long time, which might proliferate various germs. However, the sterilization mechanisms 5 and 5A are driven at the time of the operation of stopping the automatic analyzers 100 and 100A to achieve a clean state at the time of starting to leave pure water, it is possible to keep the circulation passage clean, and it is possible to shorten time until pure water of high cleanness is obtained after the subsequent startup of the analyzer.

Moreover, the liquid feeding velocity of the circulation water pumps 4 and 4A is adjusted based on the operation of the sterilization mechanisms 5 and 5A, and thus it is possible to enhance sterilization efficiency in the sterilization mechanisms 5 and 5A, and it is possible to maintain the circulation passage in a cleaner state. Furthermore, it is also possible to prevent pure water from being retained in the circulating water passage.

Further, the cleanliness measurement unit 10 that measures the cleanness of pure water is further provided. The operation of the sterilization mechanisms 5 and 5A is controlled based on the cleanness of pure water measured by the cleanliness measurement unit 10, and thus it is possible to carry out sterilization only at necessary timing, it is possible to keep the cleanness in the circulation channel at a certain level or more, and it is possible to intend to prolong the lifetime of the sterilization mechanisms 5 and 5A and the like.

Moreover, the liquid temperature measurement unit 11 that measures the liquid temperature of pure water is further included. The operation of the sterilization mechanisms 5 and 5A is controlled based on the liquid temperature of pure water measured by the liquid temperature measurement unit 11, and thus sterilization can be performed under an environment where various germs are most proliferated. Accordingly, it is possible to more efficiently perform sterilization, and it is possible to simplify measures against long lifetime, continuous operation, and the like.

Further, the sterilization mechanisms 5 and 5A are operated when a specific operation in the analysis module 20 is detected, and thus it is possible to carry out the sterilization operation at the timing when the user is desired, and it is possible to contribute to improving convenience for a service person and the like and maintainability.

In addition, the circulation channel 8 is branched from the supply channel 7, and returns a part of the pure water discharged from the circulation water pump 4 to the buffer tank 3. The sterilization mechanism 5 sterilizes the pure water flowing on the upstream side from the branch unit 12 of the supply channel 7 and the circulation channel 8 in the supply channel 7. Thus, it is possible to prevent the pure water from not passing thorough the sterilization mechanism 5 to be supplied to the analysis module 20, and it is possible to provide a configuration in which the minimum sterilization process is performed and then pure water is supplied to the analysis module 20 even in a situation, for example, in which a large amount of pure water is consumed and pure water is supplied with no circulation.

### <Others>

Note that the present invention is not limited to the embodiment above, which can be variously modified and is applicable. In the foregoing embodiment, the present invention is described in detail for easy understanding, and does not necessarily have to be limited to those having all the configurations that are described.

### List of Reference Signs

- 2: solenoid valve
- 3, 3A: buffer tank
- 4, 4A: circulation water pump (liquid feeding pump)
- 5, 5A: sterilization mechanism
- 6: solenoid valve
- 7, 7A: supply channel
- 8, 8A: circulation channel
- 9: water supply channel
- 10: cleanliness measurement unit
- 11: liquid temperature measurement unit
- 12: branch unit
- 13A: liquid feeding pump
- 20: analysis module
- 30: control unit
- 50: pure water production device
- 100, 100A: automatic analyzer

## Claims

1. An automatic analyzer comprising:
an analysis module that analyzes a specimen; and
a supply system that supplies a liquid to the analysis module,
wherein the supply system includes:
a buffer tank that temporarily stores the liquid supplied from the outside of the analyzer;
a supply channel through which the liquid in the buffer tank is sent to the analysis module;
a liquid feeding pump that feeds the liquid in the buffer tank;
a circulation channel through which the liquid discharged from the liquid feeding pump is returned to the buffer tank;
a sterilization unit that sterilizes the liquid in the supply system; and
a control unit that controls an operation of each device in the supply system.

2. The automatic analyzer according to claim 1,
wherein the control unit drives the sterilization unit in the case where the liquid is supplied to the buffer tank from the outside of the analyzer.

3. The automatic analyzer according to claim 1,
wherein the control unit drives the sterilization unit in the case where the liquid is supplied to the analysis module from the buffer tank.

4. The automatic analyzer according to claim 1,
wherein the control unit drives the sterilization unit when a start-up operation of the automatic analyzer is performed.

5. The automatic analyzer according to claim 1,
wherein the control unit drives the sterilization unit when a shutdown operation of the automatic analyzer is performed.

6. The automatic analyzer according to claim 1,
wherein the control unit adjusts the liquid feeding speed of the liquid feeding pump on the basis of an operation of the sterilization unit.

7. The automatic analyzer according to claim 1, further comprising a cleanliness measurement unit that measures the cleanliness of the liquid,
wherein the control unit controls an operation of the sterilization unit on the basis of the cleanliness of the liquid measured by the cleanliness measurement unit.

8. The automatic analyzer according to claim 1, further comprising a liquid temperature measurement unit that measures the temperature of the liquid,
wherein the control unit controls an operation of the sterilization unit on the basis of the temperature of the liquid measured by the liquid temperature measurement unit.

9. The automatic analyzer according to claim 1,
wherein the control unit operates the sterilization unit when a specific operation is detected in the analysis module.

10. The automatic analyzer according to claim 1,
wherein the circulation channel returns a part of the liquid that is branched from the supply channel and is discharged from the liquid feeding pump to the buffer tank, and
wherein the sterilization unit sterilizes the liquid that flows on the upstream side relative to a branch unit of the supply channel and the circulation channel in the supply channel.
